# EUROPÄISCHE PATENTANMELDUNG

(11) **EP 2 918 783 A1**
(43) Veröffentlichungstag der Anmeldung: **16.09.2015**
(21) Anmeldenummer: 14159057.0
(22) Anmeldetag: 12.03.2014
(51) Int. Cl.: F01D 5/28, F01D 5/30

(54) **Turbinenschaufel mit einer beschichteten Plattform**

(71) Anmelder: Siemens Aktiengesellschaft, 80333 München (DE)
(72) Erfinder: de Lazzer, Armin, 45479 Mülheim an der Ruhr (DE)

(57) **Zusammenfassung**

Die Erfindung betrifft eine Turbinenschaufel (1) mit einem Schaufelblatt (2) und einem Schaufelfuß (3), wobei eine erste Turbinenschaufel (17) eng an einer zweiten Turbinenschaufel (18) anliegt, so dass die Plattform (8) der ersten Turbinenschaufel (17) berührend mit der zweiten Plattform (8) der zweiten Turbinenschaufel (18) ausgebildet ist, wobei die Vorderseite (12) und/oder die Rückseite (13) der Plattform (8) mit einer Beschichtung (16, 20) versehen wird.

## Beschreibung

Die Erfindung betrifft eine Turbinenschaufel mit einem Schaufelblatt und einem Schaufelfuß, wobei der Schaufelfuß eine Plattform aufweist, wobei die Plattform zwei Seitenflächen und eine Vorderseite sowie eine Rückseite aufweist, wobei die Vorderseite zum Anliegen an einer Rückseite an einer benachbart liegenden Turbinenschaufel ausgebildet ist.

Unter der Sammelbezeichnung "Strömungsmaschine" werden Wasserturbinen, Dampf- und Gasturbinen, Windräder, Kreiselpumpen und Kreiselverdichter sowie Propeller zusammengefasst. Allen diesen Maschinen ist gemeinsam, dass sie den Zweck dienen, einem Fluid Energie zu entziehen, und damit eine andere Maschine anzutreiben oder umgekehrt, einem Fluid Energie zuzuführen, um dessen Druck zu erhöhen.

Dampfturbinen als Ausführungsform einer Strömungsmaschine umfassen im Wesentlichen einen drehbar gelagerten Rotor und ein um den Rotor angeordnetes Gehäuse. In der Regel werden Dampfturbinen aus einem Innengehäuse und einem Außengehäuse ausgebildet, wobei das Außengehäuse um das Innengehäuse angeordnet ist. Der Rotor umfasst auf den Umfang verteilte Turbinenlaufschaufeln, die in der Regel in Nuten benachbart zueinander angeordnet sind. Somit entstehen entlang der Rotationsachse mehrere hintereinander angeordnete Turbinenlaufschaufelreihen. Das Innengehäuse wiederum umfasst Turbinenleitschaufeln, die ebenso in einer Umfangsrichtung benachbart zueinander angeordnet sind, so dass dadurch Turbinenleitschaufelreihen entstehen, die zwischen den Turbinenlaufschaufelreihen angeordnet sind. Im Betrieb strömt ein Dampf mit einer hohen thermischen Energie zwischen den Turbinenlaufschaufeln und den Turbinenleitschaufeln, wobei die thermische Energie des Dampfes in Rotationsenergie des Rotors umgewandelt wird.

Die Montage der einzelnen Bauteile, wie zum Beispiel der Turbinenlaufschaufeln in die Nut erfolgt bei Raumtemperatur. Im Betrieb hingegen können Temperaturen von über 600°C auftreten, was zu erhöhten technischen Anforderungen an den Bau solcher Strömungsmaschinen führt.

Turbinenkomponenten im Allgemeinen sind somit im Betrieb transienten thermischen Belastungen ausgesetzt, das bedeutet, dass thermische Änderungen dazu führen, dass die einzelnen Turbinenkomponenten erwärmt oder abgekühlt werden. Die Wärmekapazitäten und die Größen der Bauteile sind in der Regel unterschiedlich, was zu dem Effekt führt, dass einzelne Turbinenkomponenten einer Temperaturänderung unterschiedlich folgen. Weniger massive Turbinenkomponenten werden schneller erwärmt oder abgekühlt als massivere Turbinenkomponenten.

Die im Strömungsmaschinenbau eingesetzten Stähle weisen einen Wärmeausdehnungskoeffizienten von ungleich Null auf, was dazu führt, dass die Abmessungen der Turbinenkomponenten mit Änderung der Temperatur sich ändern. In der Regel werden die Turbinenkomponenten mit zunehmender Temperatur größer. Dies führt dazu, dass während transienter Temperaturänderungen Verspannungen zwischen Komponenten entstehen können, die unterschiedlich schnell durchwärmt werden. Insbesondere können Spannungen zwischen Turbinenkomponenten unterschiedlicher Größe entstehen, da diese unterschiedlich schnell durchwärmt werden.

Diese Verspannungen können zu erheblichen mechanischen Belastungen für die Turbinenkomponenten bis hin zur Schädigung der Turbinenkomponente führen.

Somit stellt es eine Herausforderung dar, Strömungsmaschinen insbesondere im transienten Betrieb auszulegen. Aufgrund der Kompensation fluktuierender Stromeinspeisung durch erneuerbare Energie ist der Betrieb von Dampfturbinen dadurch geprägt, dass diese in stark zunehmendem Maße im Lastwechselbetrieb betrieben werden müssen. Dabei wird im Hinblick auf die Wirtschaftlichkeit eines Kraftwerks der Fokus darauf gesetzt, dass auf eine schnelle Änderung der Last eine schnelle Reaktion der Dampfturbine erfolgt.

Je größer der Lastwechselgradient und je kürzer die Startzeit, umso größer steigen die thermischen Belastungen der Turbinenkomponenten und somit auch die Gefahr, dass die einzelnen Turbinenkomponenten durch thermische Spannungen geschädigt werden. Ebenso problematisch sind Temperatursprünge, die in einem gewissen Rahmen eingehalten werden müssen.

Eine Turbinenkomponente stellt beispielsweise der Rotor und eine Turbinenschaufel dar. Die Turbinenschaufeln werden in Nuten, die in Umfangsrichtung angeordnet sind, dicht aneinander angelegt. Die vom im Betrieb aufkommenden Dampf umströmten Turbinenschaufeln nehmen Temperaturänderungen des Dampfes sehr schnell auf, was damit zusammenhängt, dass Turbinenschaufeln wie Kühl- oder Heizrippen mit großer Oberfläche relativ zu ihrem Volumen wirken. Demgegenüber ist der Rotor dem im Betrieb aufkommenden Dampf nur entlang einer vergleichsweise kleinen Oberfläche, relativ zu seinem Volumen gesehen, ausgesetzt. Somit durchwärmt der Rotor im Vergleich zu einer Turbinenschaufel wesentlich langsamer. Das bedeutet, dass zum Beispiel eine Laufschaufelreihe die Wärme schneller aufnimmt und ebenso schneller thermisch wächst als der Rotor, so dass das thermische Wachstum des Rotors hinter dem Wachstum der Turbinenschaufeln zurückgeht.

Es entstehen thermisch bedingte Spannungen in der Verankerung der Turbinenschaufeln. Da die Schaufelreihe im Durchmesser nicht wachsen kann, entstehen auch Druckspannungen in Umfangsrichtung.

Bei Turbinenschaufeln in einer Turbinenschaufelanordnung einer Turbinenschaufelreihe liegen die Komponenten wie z.B. die Plattform eng aneinander an. Durch einen thermisch transienten Betrieb kann es vorkommen, dass eine Bewegung zwischen der Vorderseite sowie der Rückseite der Plattform entsteht. Der Reibungskoeffizient zwischen den benachbarten Komponenten sollte klein sein. Allerdings gilt dies für Stahl nur in frisch bearbeitetem Zustand. Die dem Dampf ausgesetzten Oberflächen altern mit der Zeit, was durch Effekte wie Verzundern oder Oxidieren beschrieben wird. Der Reibungskoeffizient steigt und eine beabsichtigte Verdrehung wird durch die erhöhte Reibung nunmehr verhindert. Die zur Verdrehung benötigten Spannungen steigen. Unter ungünstigen Bedingungen kann der Reibungskoeffizient so groß werden, dass eine Verdrehung unmöglich wird und die Komponente durch thermische Spannungen geschädigt wird.

Aufgabe der Erfindung ist es eine Turbinenschaufel anzugeben, die eine längere Haltbarkeit aufweist.

Gelöst wird diese Aufgabe durch eine Turbinenschaufel mit einem Schaufelblatt und einem Schaufelfuß, wobei der Schaufelfuß eine Plattform aufweist, wobei die Plattform zwei Seitenflächen und eine Vorderseite sowie eine Rückseite aufweist, wobei die Vorderseite zum Anlegen an einer Rückseite einer benachbart liegenden Turbinenschaufel ausgebildet ist, wobei die Vorderseite eine Beschichtung aufweist.

Die Erfindung geht somit den Weg einer Verschlechterung des Reibungskoeffizienten, die durch eine unvermeidbare Alterung der Oberfläche der Komponenten entsteht, zu vermeiden, indem eine Beschichtung angeordnet wird und diese an einander anliegenden Flächen angeordnet wird. Diese Schicht sollte möglichst dünn sein und eine Beständigkeit gegenüber Oxidation und Verzunderung aufweisen. Ebenso wäre eine Beschichtung erforderlich, die einen dauerhaft niedrigen Reibungskoeffizienten aufweist. Dadurch ist eine Begrenzung von thermischen Spannungen möglich, die zuverlässig und langfristig funktioniert. Ebenso sind im Schaufelverband größere thermische Gradienten bzw. schnellere Temperaturänderungen möglich, ohne dass ein Schaden im Schaufelverband entstehen kann. Dadurch sind größere Temperatursprünge, die beim Anfahren bzw. beim Start erfolgen, möglich.

Das führt dazu, dass die Dampfturbine flexibler betrieben werden kann, was zu kürzeren Startzeiten und schnelleren Lastwechseln führt.

Vorteilhafte Weiterbildungen sind in den Unteransprüchen angegeben.

In einer ersten vorteilhaften Weiterbildung wird die Rückseite ebenfalls mit einer Beschichtung versehen. Diese Beschichtung kann in einer vorteilhaften Weiterbildung die gleiche chemische Zusammensetzung der Beschichtung der Vorderseite aufweisen.

In einer weiteren vorteilhaften Weiterbildung kann die chemische Zusammensetzung der Vorderseite unterschiedlich zu der chemischen Zusammensetzung der Beschichtung der Rückseite sein.

Die Plattform ist in vorteilhafter Weise mit einem rhombischen Querschnitt ausgebildet.

Die Erfindung wird nun anhand eines Ausführungsbeispiels näher erläutert.

Es zeigen:
- Figur 1: eine perspektivische Darstellung zweier Turbinenschaufeln;
- Figur 2: eine Draufsicht auf den Montagezustand eines Ausschnitts eines Schaufelverbandes;
- Figur 3: eine theoretische Darstellung der thermischen Expansion eines Schaufelverbandes;
- Figur 4: eine Draufsicht auf eine Verdrehung der einzelnen Turbinenschaufeln des Schaufelverbandes;
- Figur 5: eine Ansicht eines erfindungsgemäßen Schaufelverbandes.

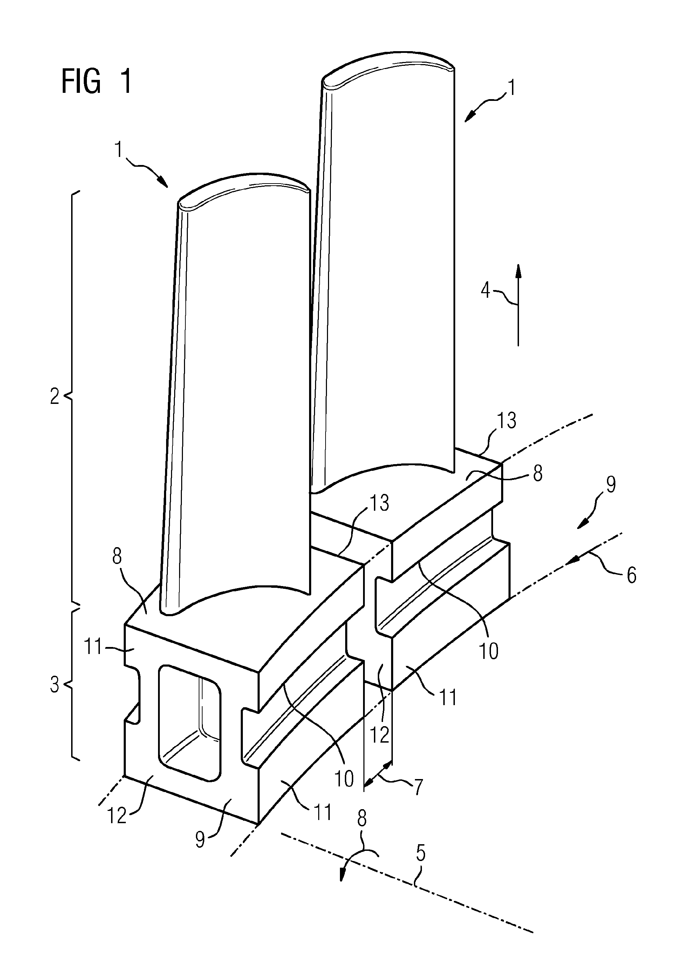

Die Figur 1 zeigt zwei Turbinenschaufeln 1 mit einem Schaufelblatt 2 und einem Schaufelfuß 3. Das Schaufelblatt 2 ist profiliert und zum Einbau in eine Strömungsmaschine wie z.B. einer Dampfturbine ausgebildet. Die Turbinenschaufel 1 ist entlang einer Schaufelachse 4 ausgebildet, die senkrecht zu einer Rotationsachse 5 angeordnet ist. In der Figur sind lediglich zwei Turbinenschaufeln 1 dargestellt. Ein ganzer Turbinenschaufelverband weist mehrere in einer Umfangsrichtung 6 angeordnete Turbinenschaufeln 1, die eng aneinander liegen. In der Figur 1 ist bewusst ein Abstand 7 zwischen zwei Turbinenschaufeln 1 dargestellt. Der Schaufelverband rotiert in einer Rotationsrichtung 21.

Der Schaufelfuß 3 weist eine Plattform 8 auf, die rhombisch ausgeführt ist. Der Schaufelfuß 3 ist als Hammerkopf 9 ausgebildet. D.h. neben einer Aussparung 10, die an einer Seitenfläche 11 angeordnet ist, ist die Nut komplementär dazu ausgeführt. In Umfangsrichtung 6 gesehen, weist die Plattform 8 eine Vorderseite 12 und eine Rückseite 13 auf.

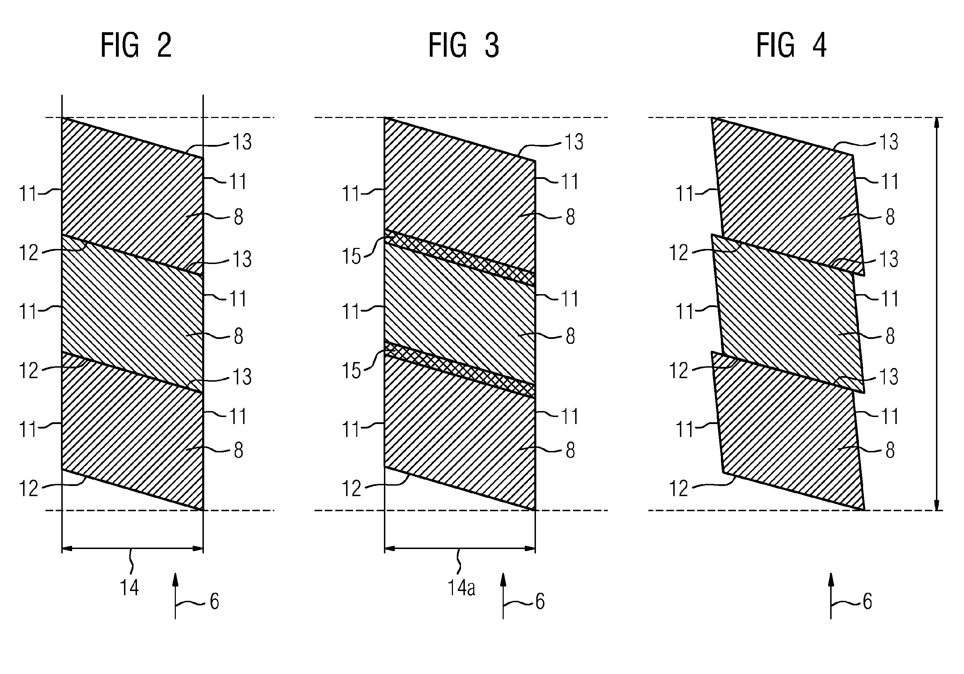

Die Vorderseite 12 ist zum Anliegen an einer Rückseite 13 der benachbart liegenden Turbinenschaufel 1 ausgebildet. Die Figur 2 zeigt eine Draufsicht auf die rhombisch ausgeführte Plattform 8. Zu sehen ist, dass die eng aneinander liegenden Vorderseiten 12 an den Rückseiten 13 anliegen. Die Breite 14 der Plattform 8 wird in einer entsprechenden Nut in einem Rotor angeordnet.

Die Figur 3 zeigt einen theoretischen Zustand während eines transienten Betriebes. Die Breite 14a ist gegenüber der Breite 14 im Montagezustand (siehe Figur 1) leicht angewachsen. Auch in Umfangsrichtung 6 ist die Größe der Plattform 8 leicht angewachsen, was durch den schraffierten, überschnittenen Bereich 15 zu sehen ist. Dieser Bereich 15 führt zu Spannungen, die schließlich zu einer Drehung im Uhrzeigersinn der Schaufelfüße 3 führt, wie es in der Figur 4 dargestellt ist. Diese Drehung erfolgt durch ein Verschieben der Vorderseite 12 gegenüber der Rückseite 13, wenn der Reibungskoeffizient zwischen der Vorderseite 12 und der Rückseite 13 entsprechend gering ist. Dies kann durch eine Verzunderung bzw. Oxidation der Vorderseite 12 und der Rückseite 13 unterbunden sein.

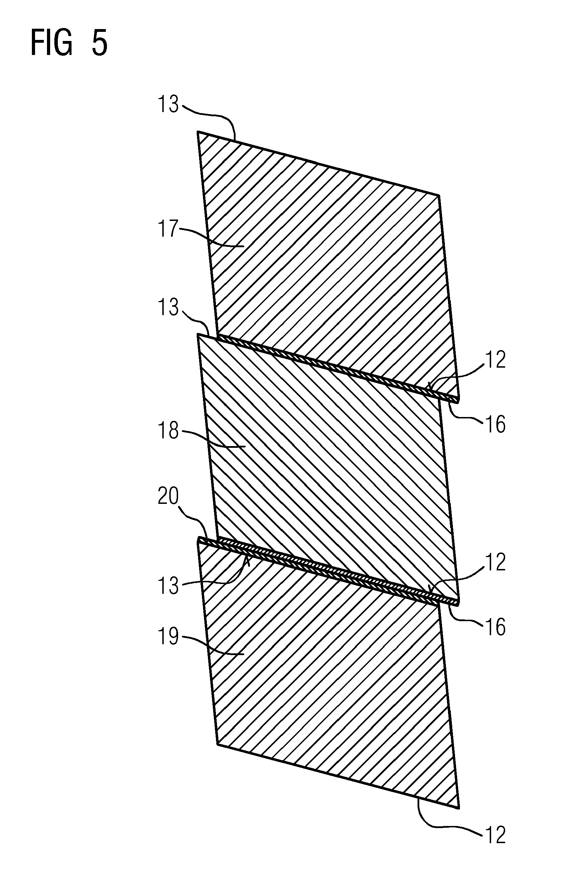

Figur 5 zeigt wie die Vorderseite 12 mit einer Beschichtung 16 ausgebildet wird, um eine leichtere Drehung zu ermöglichen.

Zwischen einer ersten Turbinenschaufel 17 und einer zweiten Turbinenschaufel 18 weist lediglich die Vorderseite 12 der ersten Turbinenschaufel 17 eine Beschichtung 16 auf. Zwischen der zweiten Turbinenschaufel 18 und der dritten Turbinenschaufel 19 ist sowohl die Vorderseite 12 mit einer Beschichtung 16 als auch die Rückseite 13 der dritten Turbinenschaufel 19 mit einer zweiten Beschichtung 20 versehen.

Die chemische Zusammensetzung der Beschichtung 16 der Vorderseite 12 ist gleich wie die chemische Zusammensetzung der zweiten Beschichtung der Rückseite 13. In einer alternativen Ausführungsform ist die chemische Zusammensetzung der Beschichtung 16 der Vorderseite 12 unterschiedlich zu der chemischen Zusammensetzung der zweiten Beschichtung 20 der Rückseite 13.

Die Plattform 8 weist einen rhombischen Querschnitt auf. In alternativen Ausführungsformen kann die Plattform eine andere Gestalt aufweisen.

Der Turbinenschaufelfuß 3 weist in der in Figur 1 dargestellten Ausführungsform einen Hammerkopf auf. In alternativen Ausführungsformen kann der Schaufelfuß bspw. als Tannenbaumfuß ausgebildet sein.

## Patentansprüche

1. Turbinenschaufel (1) mit einem Schaufelblatt (2) und einem Schaufelfuß (3),
wobei der Schaufelfuß (3) eine Plattform (8) aufweist, wobei die Plattform (8) zwei Seitenflächen (11) und eine Vorderseite (12) sowie eine Rückseite (13) aufweist,
wobei die Vorderseite (12) zum Anliegen an einer Rückseite (13) einer benachbart liegenden Turbinenschaufel (1) ausgebildet ist,
**dadurch gekennzeichnet, dass**
die Vorderseite (12) eine Beschichtung (16) aufweist.

2. Turbinenschaufel (1),
wobei die Rückseite (13) eine zweite Beschichtung (20) aufweist.

3. Turbinenschaufel (1) nach Anspruch 2,
wobei die chemische Zusammensetzung der Beschichtung (16) der Vorderseite (12) gleich ist wie die chemische Zusammensetzung der zweiten Beschichtung (20) der Rückseite (13).

4. Turbinenschaufel (1) nach Anspruch 2,
wobei die chemische Zusammensetzung der Beschichtung (16) der Vorderseite (12) unterschiedlich ist zu der chemischen Zusammensetzung der zweiten Beschichtung (20) der Rückseite (13).

5. Turbinenschaufel (1) nach einem der vorhergehenden Ansprüche,
wobei die Plattform (8) einen rhombischen Querschnitt aufweist.
